# DEMANDE DE BREVET EUROPEEN

(11) **EP 0 785 154 A1**
(43) Date de publication de la demande: **23.07.1997**
(21) Numéro de dépôt: 97400096.0
(22) Date de dépôt: 17.01.1997
(51) Int. Cl.: B65G 25/08, B65G 1/06

(54) **Barre de transfert pour le deplacement de mobiles**

(30) Priorité: 19.01.1996 FR 9600573
(71) Demandeur: S.A.R.L. Alpha Platre, 77270 Villeparisis (FR)
(72) Inventeur: Setera, Alain, 77540 Lumigny (FR)

(57) **Abrégé**

L'invention concerne un dispositif qui permet le déplacement, le stockage ou le déstockage de mobiles sur une ligne d'alimentation reliant par exemple 2 postes de travail sur une chaine de fabrication par seulement la sélection de 2 types de mouvements alternatifs dudit dispositif.

Une barre (2) animée de deux types de mouvements alternatifs déplace par exemple des wagons (1) équipés d'ergots basculants (7) par l'intermédiaire d'ergots fixes (3) et (4) sous l'action de vérins hydrauliques (10).

## Description

La présente invention concerne un dispositif permettant de déplacer, de positionner et de stocker sur une voie de transfert des mobiles transitant d'un point d'entrée vers un point de sortie, par exemple non limitatif entre deux postes de fabrication d'une usine afin d'en assurer l'alimentation.

La liaison entre deux postes de fabrication est traditionnellement assurée par des systèmes de tapis transporteur, chaine de manutention ou cable tracteur d'une utilisation rigide car l'ensemble des mobiles placés sur ces appareils avance de la même quantité et ne peuvent pas se déplacer les uns par rapport aux autres.

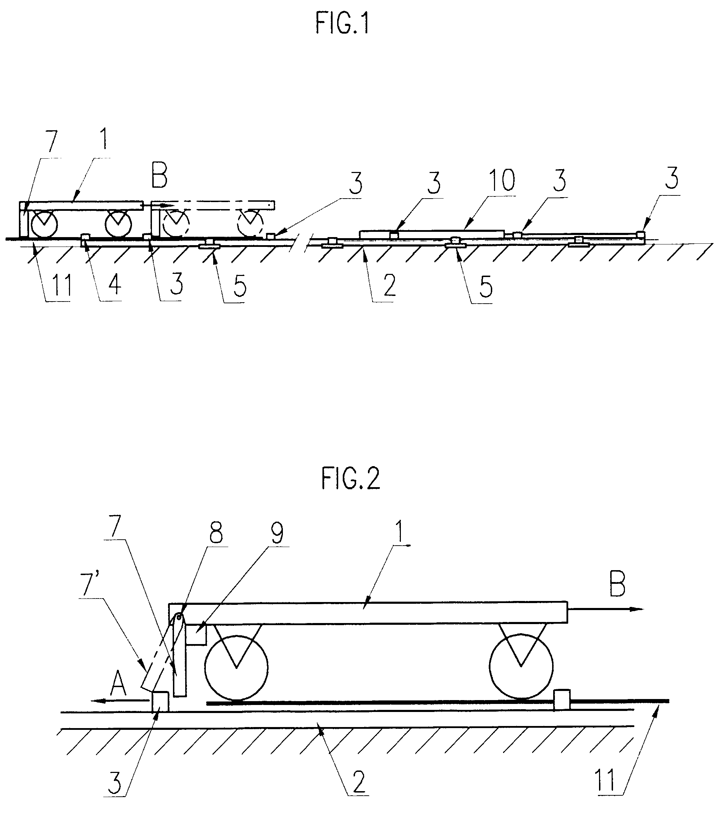

Le dispositif selon l'invention que nous appellerons barre de transfert permet de remédier à ces inconvénients. Dans une application non limitative, à la propulsion de wagons roulant sur rails entre deux postes de travail, le dispositif est principalement constitué, par exemple suivant la figure 1 par une barre (2) rigide et rectiligne, placée sur le sol entre les rails (11) dans des guidages (5) lui permettant un mouvement longitudinal de va et vient. Ladite barre est équipée d'ergots (3) fixes, espacés d'une distance égale à la longueur des wagons, sur toute sa longueur constituant ainsi un pas et du coté entrée d'un premier ergot fixe (4) plus rapproché du second, par exemple d'un demi pas.

A l'extrémité de la barre du coté sortie vers le poste 2 , est accouplé à ladite barre par exemple non limitatif, un vérin hydraulique (10) faisant travailler en traction ladite barre en traction, en lui imprimant une course de va et vient maximum égale au pas plus la course de basculement des ergots (7) des wagons, ou selon la demande un va et vient d'une course réduite par exemple au pas sans la corse de basculement des ergots des wagons.

Selon la figure 2, les wagons sont équipés d'un ergot (7) basculant en (7') autour de l'axe (8) lorsque l'ergot fixe (3) de la barre (2) se déplace suivant la flèche A. Une butée (9) bloque l'ergot basculant, lors du retour de la barre (2) et permet à l'ergot (3) d'entrainer le wagon suivant la flêche B.

On remarque sur la figure 1 que par un premier va et vient de course réduite de la barre (2) l'ergot (4) va basculer l'ergot (7) et entraine le wagon dans le sens de la flêche B. Par un second va et vient identique , le premier ergot (3) peut alors se saisir de l'ergot basculant (7) et placer ainsi le wagon dans le pas de la barre, alors que des wagons placés plus avant sur la barre de transfert resteront immobiles, la course de ladite barre étant réduite. Un second, puis un troisième wagon peuvent être introduits à l'entrée de la barre dans les mêmes conditions, ces wagons poussant alors le ou les précédents.

Par un va et vient de course maximale de la barre (2), l'ensemble des wagons va cheminer vers la sortie, plusieurs mouvements identiques peuvent être utilisés pour combler les espaces vides dans le stockage des wagons sur la barre de transfert.

On voit donc qu'il est possible d'introduire dans le système, de stocker, de déstocker à volonté et de positionner en fin de transfert ces wagons, la position d'évacuation correspondant au second poste de travail, par seulement la sélection de deux va et vient course réduite ou de un va et vient course maximum.

## Revendications

1. Barre équipée d'ergots d'entrainement fixes constituant un pas de la longueur des mobiles à déplacer, ces mobiles étant équipés d'ergot d'entrainement basculants permettant l'avance d'un pas lors d'un mouvement alternatif maximum de la barre égal au pas plus la course de basculement de l'ergot des mobiles, ladite barre étant caractérisée en ce qu'elle possède à une extrémité par exemple coté entrée des mobiles, 2 ergots plus rapprochés par exemple de la moitié de la distance des ergots suivants, ladite barre étant également caractérisée en ce qu'elle est animée d'un mouvement alternatif maximum et d'un mouvement alternatif plus réduit égal, par exemple au pas, sans la course de basculement des ergots desdits mobiles.

2. Barre selon la revendication 1, caractérisée en ce qu'elle permet coté entrée, par deux mouvements alternatifs successifs de course réduite, le déplacement d'un mobile presenté à l'entrée d'une valeur égale au pas, sans que d'autres mobiles placés plus avant sur la barre ne se déplacent.

3. Barre selon la revendication 2, caractérisée en ce qu'un second mobile présenté à l'entrée et déplacé par deux mouvements alternatifs successifs, va pousser le mobile précédent sans que d'autres mobiles placés plus avant sur la barre ne se déplacent, constituant ainsi en répétant cette opération un stockage des mobiles sur la voie de déplacement.

4. Barre selon la revendication 1, caractérisée en ce qu'elle permet par un mouvement alternatif maximum, la sortie et le positionnement rigoureux d'un mobile, et l'avance de tous les mobiles stockés, un ou plusieurs mouvements alternatifs maximum permettant de combler des trous dans le stockage.
